# EUROPÄISCHE PATENTSCHRIFT

(11) **EP 2 408 392 B1**
(45) Veröffentlichungstag und Bekanntmachung des Hinweises auf die Patenterteilung: **08.05.2013**
(21) Anmeldenummer: 10711139.5
(22) Anmeldetag: 15.03.2010
(51) Int. Cl.: A61C 8/00, A61C 13/265

(54) **VERBINDUNGSEINRICHTUNG FÜR EINEN ZAHNERSATZ**
CONNECTING DEVICE FOR A DENTURE
DISPOSITIF DE LIAISON POUR UNE PROTHÈSE DENTAIRE

(30) Priorität: 20.03.2009 DE 102009013721
(43) Veröffentlichungstag der Anmeldung: 25.01.2012
(73) Patentinhaber: Laux, Robert, 71560 Sulzbach/Murr (DE)
(72) Erfinder: Laux, Robert, 71560 Sulzbach/Murr (DE)
(74) Vertreter: Müller, Gottfried
(86) Internationale Anmeldenummer: PCT/EP2010/001616
(87) Internationale Veröffentlichungsnummer: WO 2010/105785

(56) Entgegenhaltungen:
- EP-A1- 0 139 224
- WO-A1-98/52490
- US-A- 5 788 492

## Beschreibung

Die Erfindung bezieht sich auf eine Verbindungseinrichtung zur lösbaren Verbindung eines Zahnersatzelements mit einem Trägerteil nach dem Oberbegriff des Anspruches 1.

Bekannt sind Zahnimplantate, beispielsweise aus der DE 10 2004 018 512 A1, die einen in den Kiefer des Patienten einzusetzenden Basisträger aufweisen, auf den ein Aufbaupfosten aufgesetzt wird, mit welchem eine Sekundärkrone lösbar verbunden wird. Die Sekundärkrone ist in ein Zahnersatzteil wie beispielsweise eine Brücke oder eine sonstige Verblendung eingesetzt. Die Sekundärkrone weist einen Aufnahmeraum auf, in den der Aufbaupfosten einragt, wobei der Aufnahmeraum in der Sekundärkrone einen konischen Innenmantel aufweist, der sich zur freien Stirnseite hin öffnet. Die äußere Mantelfläche des Aufbaupfostens, der in der Verbindungsposition in den Aufnahmeraum einragt, ist ebenfalls konisch ausgebildet, wobei ein Teilsegment mit einem abweichenden Konuswinkel ausgeführt ist, wodurch das Lösen der Verbindung vereinfacht wird.

In der WO 98/52490 A1 wird eine Verbindungseinrichtung zur lösbaren Verbindung eines Implantats mit einem Abformelement beschrieben. Das auf das Implantat aufzusetzende Abformelement weist an seinem unteren Ende einen Aufnahmeraum auf, in das der obere, stirnseitige Abschnitt des Implantats einragt. Für eine in Umfangsrichtung formschlüssige Verbindung ist die axiale Stirnseite des Implantats mit einer Verzahnung versehen, die axial in zugeordnete Ausnehmungen an einem Zahnkranz, welcher sich am oberen Ende des Aufnahmeraums in Umfangsrichtung erstreckt, einragt.

Ferner ist aus der EP-A-0 139 224 eine Teleskopkronenverbindung bekannt.

Der Erfindung liegt die Aufgabe zu Grunde, eine Verbindungseinrichtung, über die ein Zahnersatzelement mit einem Trägerteil zu verbinden ist, in konstruktiv einfacher Weise derart auszugestalten, dass auch nach einem langen Zeitraum und einem oftmaligen Lösen eine sichere, Kraft übertragende Verbindung hergestellt werden kann.

Diese Aufgabe wird erfindungsgemäß mit den Merkmalen des Anspruches 1 gelöst. Die Unteransprüche geben zweckmäßige Weiterbildungen an.

Die erfindungsgemäße Verbindungseinrichtung dient zur lösbaren Verbindung einer Sekundärkrone mit einem Trägerteil, beispielsweise zur Verbindung einer Primärkrone bzw. eines Aufbaupfostens mit einer Sekundärkrone, die Träger einer Prothese oder Brücke sein kann. Die Primärkrone bzw. der Aufbaupfosten ist fest mit einem Basisträger verbunden, der im Kiefer eines Patienten eingesetzt und dort verankert ist.

Als weitere Ausführung kommt eine Verbindung zwischen einer fest stehenden Krone oder Brücke mit einer lösbaren Brücke in Betracht, wobei in dieser Ausführung das Trägerteil ein seitlich herausstehendes Befestigungselement ist, das fest mit der fest stehenden Krone oder Brücke verbunden ist und auf das die abnehmbare Brücke aufzusetzen ist.

In noch einer weiteren Ausführung findet die Verbindungseinrichtung Verwendung als Hilfsmittel zur Abdrucknahme. Die Haltekraft in der Verbindung wird in der Weise eingestellt, dass die Sekundärkappe bei der Abdrucknahme nach dem Herausnehmendes Abdruckes in der Abdruckmasse verbleibt. Anschließend wird die Primärkrone mit einem Laboranalog verbunden und kann dann sicher und lagegenau in die Sekundärkappe eingeführt werden.

Im ersten Fall ist das Trägerteil die Primärkrone. Im verbundenen Zustand greifen die Sekundärkrone und das Trägerteil ineinander, wobei eines dieser Bauteile einen Aufnahmeraum aufweist, in den das jeweils andere Bauteil einragt. Auf diese Weise ist quer zur Längsachse von Trägerteil und Sekundärkrone eine formschlüssige Verbindung gewährleistet, außerdem kann auch in Achsrichtung zumindest eine kraftschlüssige, ggf. auch eine formschlüssige Verbindung erzeugt werden, die bei Bedarf wieder gelöst werden kann.

In bevorzugter Ausführung befindet sich der Aufnahmeraum in der Sekundärkrone, wobei das Trägerteil in den Aufnahmeraum in der Sekundärkrone einragt. Grundsätzlich möglich ist aber auch eine Ausführung, in der das Trägerteil mit einem Aufnahmeraum versehen ist, in den die Sekundärkrone einragt.

Erfindungsgemäß ist vorgesehen, dass an der Innenseite sowie an der Außenseite der Wandung winkelversetzt zueinander radiale Vertiefungen und/oder radiale Erhebungen angeordnet sind. Mit dieser Ausführung wird der Effekt erzielt, dass in Umfangsrichtung gesehen eine Wandstärke eingestellt werden kann, die sich nur verhältnismäßig geringfügig ändert, wobei die radialen Vertiefungen und Erhebungen zu einer Wellenform der Wandung führen, was eine Ziehharmonika- oder Girlandeneffekt unterstützt. Die Wandung kann im elastischen Bereich radial aufgeweitet werden, was beim Zusammenfügungsvorgang der beiden Bauteile vorteilhaft ist. Ebenso kann sich nach dem Erreichen der Verbindungsposition die Wandung wieder elastisch zusammenziehen, wodurch insbesondere in Achsrichtung Haltekräfte erzeugt werden. Die zumindest annähernd gleichmäßige Wandstärke unterstützt und ermöglicht das radiale Aufweiten bzw. Zusammenziehen der Wandung.

Die Wandung des Aufnahmeraums ist vorteilhafterweise zumindest abschnittsweise durchgehend und ohne Durchbrechungen ausgebildet ist, so dass die Wandung keine Schwächung erfährt und das den Aufnahmeraum aufweisende Bauteil stabil ausgeführt ist. Somit kann auch über einen langen Betriebszeitraum die volle Funktionstüchtigkeit mit den erforderlichen Verbindungskräften gewährleistet werden. Auch ein wiederholtes Lösen und erneutes Verbinden, was mit einer Belastung der Wandung des Aufnahmeraums insbesondere in Radialrichtung einhergeht, verschlechtert nicht die Elastizität der Wandung, so dass die Verbindungskräfte aufrechterhalten werden können.

Als Material für die Wandung des Aufnahmeraums kommt insbesondere Metall in Betracht. Da die Wandung frei von Durchbrechungen ist, kann grundsätzlich aber auch ein Kunststoff eingesetzt werden, da die durchgehende Wandung ausreichend hohe Verbindungskräfte ermöglicht.

Grundsätzlich genügt es, sowohl an der Innenwand als auch der Außenwand des Aufnahmeraums jeweils radiale Vertiefungen einzubringen, die zu einer Reduzierung der Wandstärke führen. Diese Ausführung lässt sich in einfacher Weise dadurch herstellen, dass ein Aufnahmeraum mit einer verhältnismäßig großen Wandstärke als Halbzeug hergestellt wird und dass anschließend durch spanende oder nichtspanende Bearbeitung an der Innenseite und der Außenseite radial Material abgetragen wird. Auf Grund der winkelversetzten Anordnung der radialen Vertiefungen an der Innen- und Außenseite der Wandung kann eine annähernd gleichmäßige Schwächung der Wandung erreicht werden.

Grundsätzlich möglich sind aber auch radiale Erhebungen, die beispielsweise im Wege des Spritzgießverfahrens hergestellt werden. Wesentlich ist, dass die Wandung des Aufnahmeraums in Umfangsrichtung gesehen eine etwa wellenförmige Struktur aufweist, die den gewünschten Ziehharmonikaeffekt unterstützt.

Gemäß weiterer vorteilhafter Ausführung ist vorgesehen, dass die radialen Vertiefungen an der Innen- und Außenseite des Aufnahmeraums in Radialrichtung jeweils nicht mehr als 50 % der Wandstärke betragen. Die Vertiefungen sind zweckmäßigerweise jeweils kreisbogenförmig ausgebildet, was einen stetigen Übergang zwischen Abschnitten der Wandstärke, welche keine Vertiefung aufweisen, mit solchen Abschnitten gewährleistet, in die eine Vertiefung eingebracht ist.

Gemäß der Erfindung weist der Aufnahmeraum mindestens einen sich in Achsrichtung erstreckenden konischen Abschnitt auf, vorzugsweise aber zwei konische Abschnitte, die zueinander mit gegenläufigem Konuswinkel ausgeführt sind, wobei sich ein konischer Abschnitt in Richtung der freien Stirnseite des Aufnahmeraums verjüngt. In dieser Ausführung verjüngt sich der Aufnahmeraum zu den jeweiligen axialen Stirnseiten hin, so dass der größte Innenradius mit Abstand zu den beiden axialen Stirnseiten des Aufnahmeraums liegt. Auf diese Weise ist eine in Achsrichtung formschlüssige Verbindung mit dem Trägerteil möglich, indem die freie Stirnseite des Aufnahmeraums beim Aufschieben auf das andere Bauteil radial aufgeweitet wird, bis die endgültige Montageposition erreicht ist, in der sich die Wandung des Aufnahmeraums auf Grund der Eigenelastizität wieder zusammenzieht. Der Aufnahmeraum umgreift das andere Bauteil klammerförmig, wodurch auch in Achsrichtung, also in Löse- bzw. Verbindungsrichtung - eine formschlüssige Verbindung zwischen den Bauteilen realisiert wird.

Der Formschluss kann ggf. noch dadurch unterstützt werden, dass die Mantelfläche des in den Aufnahmeraum einzuführenden Bauteils an den Innenmantel des Aufnahmeraums angepasst ist und somit zwei konische Abschnitte mit gegenläufigem Konuswinkel aufweist. Beim Einführen in den Aufnahmeraum wird die Wandung des Aufnahmeraums zunächst radial aufgeweitet, bis spätestens mit dem Erreichen der endgültigen Verbindungsposition die Wandung sich wieder radial zusammenzieht.

Im Bereich des Übergangs zwischen den beiden konischen Abschnitten kann an der Innenfläche des Aufnahmeraums eine Ausnehmung angeordnet sein, vorzugsweise eine umlaufende Ringnut, in die in der Montageposition die umlaufende Kante zwischen den beiden konischen Abschnitten am Außenmantel des anderen Bauteils einragt. Auf diese Weise wird eine punktuell oder linienförmig hohe Belastung des Innenmantels des Aufnahmeraums sowie der außen liegenden Kante am anderen Bauteil vermieden.

Des Weiteren kann es angezeigt sein, an der Innenseite eines konischen Abschnitts im Aufnahmeraum eine Ausfräsung in Form einer zylindrischen Ausnehmung vorzusehen, der eine umlaufende Ringschulter an der Mantelfläche des anderen Bauteils zugeordnet ist. In der Montage- bzw. Verbindungsposition liegt die Ringschulter an der zylindrischen Ausnehmung an, wodurch in Achsrichtung die endgültige Montage- bzw. Verbindungsposition festgelegt ist.

Die radialen Vertiefungen und/oder radialen Erhebungen können sich grundsätzlich über die gesamte axiale Länge des Aufnahmeraums entlang der Wandung des Aufnahmeraums erstrecken. Bei einer Ausführung des Aufnahmeraums mit zwei konischen Abschnitten ist es aber zweckmäßig, dass die Vertiefungen bzw. Erhebungen an der Außenseite der Wandung des Aufnahmeraums sich über die gesamte axiale Länge erstrecken, wohingegen an der Innenseite eine axiale Erstreckung lediglich im Bereich des der freien Stirnseite zugewandten konischen Abschnittes ausreicht.

Gemäß einer weiteren vorteilhaften Ausführung ist vorgesehen, dass der der freien axialen Stirnseite zugewandte konische Abschnitt eine kleinere axiale Länge aufweist als der zweite, der freien Stirnseite abgewandte konische Abschnitt im Aufnahmeraum. Dadurch ist gewährleistet, dass zum Erreichen der Verbindungsposition während der Einschubbewegung des Bauteils in den Aufnahmeraum die Wandung lediglich während eines verhältnismäßig kurzen Kontaktbereichs zwischen der Innenseite des Aufnahmeraums und der Mantelfläche des anderen Bauteils aufweiten muss.

Die Vertiefungen bzw. Erhebungen an der Innenseite bzw. der Außenseite der Wandung der Sekundärkrone erstrecken sich vorzugsweise über den gleichen, gemeinsamen axialen Abschnitt der Sekundärkrone. Gegebenenfalls kommt auch eine axial versetzte Anordnung der Vertiefungen bzw. Erhebungen in Betracht, beispielsweise dergestalt, dass an einer oder an beiden Seiten der Sekundärkrone die Vertiefungen oder Erhebungen in zwei oder mehreren Bändern in Umfangsrichtung an der Mantelfläche angeordnet sind.

Gemäß einer weiteren zweckmäßigen Ausführung ist vorgesehen, dass die Vertiefungen bzw. Erhebungen, welche jeweils eine Erstreckung Radialrichtung aufweisen, dadurch hergestellt werden, dass ein Ausgangsmodell einer Sekundärkrone an der Innenwand und/oder Außenwand entsprechend ausgefräst wird. Das Ausgangsmodell weist insbesondere eine konstante Wandstärke auf. Im Bereich der Ausfräsungen entstehen Vertiefungen, welche in Erhebungen übergehen, die sich an Stellen befinden, welche nicht bzw. weniger stark ausgefräst sind.

Gemäß einer weiteren vorteilhaften Ausführung ist vorgesehen, dass das Verhältnis des nicht-ausgefrästen Innenradius der Sekundärkrone zu den radialen Vertiefungen an der Innenseite, welche durch Ausfräsen gebildet sind, zwischen 70 % und 90 % liegt, insbesondere zwischen 80 und 85 %, vorzugsweise zwischen 83 und 84 %. Beispielsweise kann der Innendurchmesser 3.1 mm betragen und der Durchmesser der ausgefrästen Vertiefungen an der Innenseite 2.6 mm, wodurch sich ein Verhältnis von 0.839 bzw. 83,9 % ergibt.

Gemäß einer weiteren zweckmäßigen Ausführung ist vorgesehen, dass an der Innenseite und an der Außenseite lediglich jeweils zwei Vertiefungen bzw. Erhebungen angeordnet sind, was den Vorteil hat, dass jede Vertiefung bzw. Erhebung mit einem verhältnismäßig großen Radius versehen werden kann, welcher ein Herausnehmen der Sekundärkrone auch bei einem schief stehenden Primärpfosten erlaubt. In diesem Fall kann die Sekundärkrone an dem Primärpfosten entlang der Ausbuchtungen mit großem Radius entlang streifen, wodurch beim Entfernen ein Verkanten vermieden wird. Die Ausbuchtungen bzw. Vertiefungen und/oder Erhebungen liegen an der Innenseite einander diametral gegenüber, ebenso an der Außenseite, wobei die Vertiefungen bzw. Erhebungen an der Innen- und Außenseite zueinander winkelversetzt angeordnet sind, insbesondere um 90°.

Gemäß einer weiteren zweckmäßigen Ausführung befindet sich der Radiusmittelpunkt der Vertiefung an der Innenwand der Sekundärkrone in einem Abstand zum Mittelpunkt der Sekundärkrone, welcher annähernd ein Drittel des Gesamtradius der Sekundärkrone beträgt, wobei der Gesamtradius gleich bedeutend ist mit dem Außenradius einer Einhüllenden, welche am Außenmantel der Sekundärkrone anliegt. Dies gilt insbesondere bei zwei inneren Vertiefungen. Bei drei inneren Vertiefungen gilt statt einem Drittel ca. die Hälfte des Gesamtradius.

Die Wandstärke der Sekundärkrone ist vorzugsweise konstant. Grundsätzlich möglich ist aber auch eine Ausführung mit einer über den Umfang nicht-konstanten Wandstärke, wodurch die Möglichkeit verbessert ist, die Sekundärkrone radial aufzuweiten. In der Ausführung mit konstanter Wandstärke weist dagegen die Sekundärkrone eine höhere Festigkeit auf.

Die Sekundärkrone weist bevorzugt einen kreisförmigen Querschnitt auf. Gegebenenfalls kommen auch unrunde Querschnitte in Betracht, beispielsweise ovale oder elliptische Querschnitte.

Gemäß einer weiteren vorteilhaften Ausführung ist die Sekundärkrone von einem Ring umgriffen, der um den Außenmantel der Sekundärkrone gelegt ist und sich axial in Höhe eines konischen Abschnittes oder beider konischer Abschnitte befindet, wobei die axiale Erstreckung des Rings so ausgeführt sein kann, dass beide konische Abschnitte am Außenmantel der Sekundärkrone entweder vollständig oder teilweise umgriffen sind. Der Ring besteht vorzugsweise aus Kunststoff, wobei sowohl eine Ausführung aus einem verhältnismäßig weichen, elastisch nachgiebigen Kunststoff als auch eine Ausführung aus einem harten Kunststoff in Betracht kommt. Der Ring erlaubt in begrenztem Maße eine Beweglichkeit der Sekundärkrone innerhalb der Position der Sekundärkrone in der Prothese, was insbesondere für das Aufsetzen und Abziehen der Sekundärkrone von dem Trägerteil, beispielsweise einem Primärpfosten bzw. Aufbaupfosten von Bedeutung ist, um ohne Beschädigung der Prothese, der Sekundärkrone bzw. des Trägerteils das Aufsetzen bzw. Abziehen zu ermöglichen. Die Nachgiebigkeit des Kunststoffrings entsteht über die Wahl des Materials und/oder über die konstruktive Ausgestaltung des Rings, der beispielsweise geschlitzt ausgeführt sein kann und insbesondere in Radialrichtung eine begrenzte Verschiebbarkeit bzw. eine Aufweitung der Sekundärkrone innerhalb der Prothese erlaubt. Eine radiale Beweglichkeit bzw. Aufweitung der Sekundärkrone in dem Zahnersatz wird durch den Ring auch dadurch ermöglicht, dass abwechselnd Abschnitte vorgesehen sind, die an der äußeren Mantelfläche anliegen, und Abschnitte, die von der äußeren Mantelfläche beabstandet sind. An den Abschnitten, an denen der Ring zur äußeren Mantelfläche der Sekundärkrone beabstandet ist, weist die Sekundärkrone Bereiche mit radialer Beweglichkeit auf, so dass sie sich entsprechend aufweiten und wieder zusammenziehen kann.

Der Ring weist außerdem den weiteren Vorteil auf, dass ein unmittelbares Anliegen des Kunststoffes der Prothese am Außenmantel der Sekundärkrone vermieden wird. Beim Befestigen der Sekundärkrone in der Prothese bzw. Brücke wird ein Überströmen von Kunststoff aus der Prothese oder Brücke in Richtung auf das Trägerteil verhindert.

Der Ring stellt eine vorteilhafte Ausgestaltung der erfindungsgemäßen Verbindungseinrichtung dar. Grundsätzlich ist aber auch unabhängig von der vorliegenden konstruktiven Ausgestaltung der Sekundärkrone eine Verbindung mit dem Ring möglich. Der umgreifende Ring am Außenmantel der Sekundärkrone kann mit beliebigen konstruktiven Ausgestaltungen der Sekundärkrone kombiniert werden, beispielsweise auch mit zylindrischen Außen- und/oder Innenflächen der Sekundärkrone. Die vorgenannten Vorteile, insbesondere die radiale Beweglichkeit der Sekundärkrone innerhalb der Prothese, gelten für beliebige konstruktive Ausführungen der Sekundärkrone in Kombination mit einem umgreifenden Ring. Auch die Sekundärkappe kann im Rahmen der Kombination mit einem umgreifenden Ring geschlitzte Bereiche aufweisen, um sich radial aufweiten zu können. Insbesondere der flexible Kunststoffring führt hier zu einer längeren Haltbarkeit der geschlitzten Kompartimente, da diese sich nicht mehr verbiegen können.

Als bevorzugtes Material für den Ring wird Kunststoff gewählt. Möglich sind aber auch Ausführungen aus einem anderen Material, beispielsweise aus Metall, wobei in diesem Fall zweckmäßigerweise zur Herstellung einer Radialbeweglichkeit Ausnehmungen, Schlitze oder dergleichen in den Ring eingebracht sind, oder wie oben beschrieben zur äußeren Mantelfläche der Sekundärkrone beabstandete Bereiche.

Die radiale Beweglichkeit der Sekundärkrone in der Prothese wird vorzugsweise über den Ring hergestellt, der für diesen Zweck ebenfalls eine radiale Beweglichkeit aufweist. Möglich ist aber auch ein Zusammenspiel von Ring und Sekundärkrone in der Weise, dass die absolute Position des Rings in der Prothese zumindest weitgehend unverändert bleibt und lediglich die Sekundärkrone innerhalb des Rings mit radialer Bewegungsmöglichkeit gehalten ist, beispielsweise dergestalt, dass zumindest abschnittsweise ein Spiel zwischen dem Außenmantel der Sekundärkrone und der Innenseite des Rings besteht und die Sekundärkrone beim Aufsetzen bzw. Entnehmen auf bzw. vom Trägerteil sich im Rahmen dieses Spiels radial bewegen kann.

Möglich ist auch eine Ausführung, bei der der Außenmantel der Sekundärkrone und die Innenseite des Rings flächig aneinander liegen, jedoch die Außenseite des Rings eine Struktur aufweist, die eine radiale Bewegung des Rings bzw. der Sekundärkrone, welche von dem Ring eingefasst ist, begünstigt. Bei dieser Struktur handelt es sich beispielsweise um eine Wellenform an der Außenseite, bei der sich Abschnitte mit kleinerem Durchmesser mit Abschnitten größeren Durchmessers abwechseln. Grundsätzlich möglich ist darüber hinaus eine Kombination verschiedener, vorgenannter Merkmale bezüglich des Rings bzw. der Kombination von Ring und Sekundärkrone.

Des Weiteren kann es unabhängig oder in Kombination mit weiteren Merkmalen zweckmäßig sein, dass die Vertiefungen und/oder Erhebungen jeweils kreisbogenförmig ausgebildet sind.

Des Weiteren kann es unabhängig oder in Kombination mit weiteren Merkmalen zweckmäßig sein, dass die radialen Vertiefungen und/oder Erhebungen in Radialrichtung bezogen auf den Innen- bzw. Außenmantel jeweils maximal 50% der Wandstärke betragen.

Des Weiteren kann es unabhängig oder in Kombination mit weiteren Merkmalen zweckmäßig sein, dass die beiden konischen Abschnitte eine unterschiedliche axiale Länge aufweisen.

Des Weiteren kann es unabhängig oder in Kombination mit weiteren Merkmalen zweckmäßig sein, dass der der freien Stirnseite des Aufnahmeraums benachbarte konische Abschnitt eine geringere axiale Länge aufweist als der der freien Stirnseite abgewandte konische Abschnitt.

Des Weiteren kann es unabhängig oder in Kombination mit weiteren Merkmalen zweckmäßig sein, dass der Aufnahmeraum teilkugelförmig ausgebildet ist.

Weitere Vorteile und zweckmäßige Ausführungen sind den weiteren Ansprüchen, der Figurenbeschreibung und den Zeichnungen zu entnehmen. Es zeigen:
- Fig. 1: einen Teilschnitt durch ein Zahnimplantat mit einer Darstellung der Verbindung zwischen einer Primärkrone und einer Sekundärkrone, welche Träger eine Prothese, einer Brücke oder einer Verblendung ist,
- Fig. 2: in perspektivischer Ansicht eine Einzeldarstellung der Sekundärkrone bzw. einer Sekundärkappe, die einen Aufnahmeraum zur Aufnahme der Primärkrone aufweist, wobei die Wandung des Aufnahmeraums an der Innenseite und an der Außenseite jeweils mit radial versetzten Vertiefungen ausgeführt ist,
- Fig. 3: eine Ansicht auf die Stirnseite der Sekundärkrone bzw. Sekundärkappe,
- Fig.4: einen Schnitt durch verschiedene, im Kiefer verankerte Implantate, wobei ein mit einer Brücke fest verbundenes, winkelförmiges Trägerteil in eine Sekundärkrone einragt, welche Träger einer lösbaren Prothese ist,
- Fig. 5: in perspektivischer Ansicht eine Einzeldarstellung einer Sekundärkrone in einer weiteren Ausführung,
- Fig. 6: eine Fig. 1 entsprechende Darstellung, jedoch mit einem zusätzlichen, die Sekundärkrone umgreifenden Ring,
- Fig. 7: in perspektivischer Ansicht eine Einzeldarstellung der Sekundärkrone bzw. einer Sekundärkappe in einer weiteren Ausführung,
- Fig. 8: in perspektivischer Ansicht eine Einzeldarstellung eines Rings, der um die Sekundärkrone zu legen ist,
- Fig. 9: in perspektivischer Ansicht die Sekundärkrone nach Fig. 7 mit dem Ring nach Fig. 8,
- Fig. 10: eine Sekundärkrone mit einem Ring in einer weiteren Ausführung.

In den Figuren sind gleiche Bauteile mit gleichen Bezugszeichen versehen.

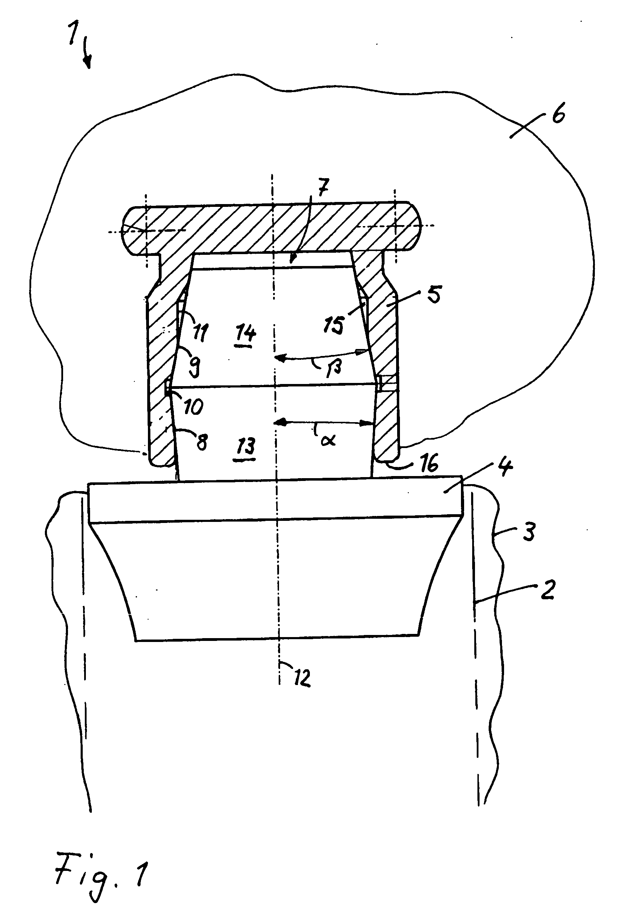

Das in Fig. 1 dargestellte Zahnimplantat 1 besteht aus einem Basiskörper 2, der in den Kiefer 3 eines Patienten eingesetzt ist, einem Aufbaupfosten bzw. einer Primärkrone 4, einer Sekundärkrone 5 und einer Prothese 6. Die Primärkrone 4 ist fest mit dem Basiskörper 2 verbunden, beispielsweise in den Basiskörper eingeschraubt. Primärkrone 4 und Sekundärkrone 5 sind lösbar miteinander verbunden. Die Prothese 6 oder eine Brücke oder dergleichen wird von der Sekundärkrone 5 getragen, wobei auf Grund der lösbaren Verbindung zwischen Primärkrone 4 und Sekundärkrone 5 die Prothese 6 entfernt und wieder eingesetzt werden kann.

Die Sekundärkrone 5 ist annähernd topf- oder hülsenförmig ausgebildet und weist einen Aufnahmeraum 7 auf, in den der obere Abschnitt der Primärkrone 4 einragt. Der nach unten offene Aufnahmeraum 7 weist zwei innen liegende, konische Abschnitte 8 und 9 auf, die zueinander gegenläufige Konuswinkel α und β besitzen. Der Konuswinkel α des der offenen Stirnseite 16 des Aufnahmeraums 7 zugewandten konischen Abschnittes 8 beträgt, bezogen auf die Längsachse 12 des Zahnimplantates 1, etwa 4°- 10°. Der Konuswinkel β des der freien Stirnseite 16 abgewandten, oben liegenden konusförmigen Abschnittes 9 beträgt etwa 10°. Sollte ein Winkelausgleich notwendig sein, beispielsweise aufgrund von divergierenden Implantaten, kann es sinnvoll sein, einen Winkel von 20 oder 25 Grad zu wählen. Auf Grund der Gegenläufigkeit der Konuswinkel α und β ist der lichte Durchmesser des Aufnahmeraums 7 im Bereich der offenen Stirnseite kleiner als im Übergangsbereich zwischen den beiden konischen Abschnitten 8 und 9. Die konischen Abschnitte 8 und 9 des Aufnahmeraums 7 besitzen eine unterschiedliche axiale Länge. Der der freien Stirnseite zugewandte, untere konische Abschnitt 8 ist mit einer kleineren axialen Länge versehen als der obere, der freien Stirnseite abgewandte konische Abschnitt 9. Das axiale Längenverhältnis beträgt etwa 2:3 bzw 1:2.

Im Übergangsbereich zwischen den konischen Abschnitten 8 und 9 ist in die Innenwand des Aufnahmeraums 7 eine umlaufende Ringnut 10 eingebracht. In den oberen konischen Abschnitt 9 ist eine zylindrische bzw. streifenförmige Ausnehmung 11 eingebracht, an dieser Stelle besitzt der Innenmantel des Aufnahmeraums 7 Zylinderform.

Analog zur Innenmantelfläche des Aufnahmeraums 7 weist auch der obere Teil der Primärkrone zwei konische, zueinander gegenläufige Abschnitte 13 und 14 auf, die bezogen auf die Längsachse 12 den gleichen Konuswinkel α bzw. β aufweisen wie die beiden konischen Abschnitte 8 und 9 des Aufnahmeraums 7. Im eingeschobenen bzw. verbundenen Zustand liegt die äußere Mantelfläche der Primärkrone 4 flächig am Innenmantel des Aufnahmeraums 7 an. Die Kante im Übergangsbereich zwischen den beiden konischen Abschnitten 13 und 14 liegt in der Ringnut 10 an, die in den Innenmantel des Aufnahmeraums 7 eingebracht ist. Im Bereich des oberen konischen Abschnittes 14 kann eine umlaufende, radial auskragende Ringschulter 15 angeordnet sein, die korrespondierend zu der zylindrischen Ausnehmung 11 im Innenmantel des Aufnahmeraums 7 ausgebildet ist und die maximale axiale Einschubtiefe der Primärkrone 4 in den Aufnahmeraum 7 bestimmt. Die zylindrische Ausnehmung 11 im Innenmantel kann allerdings auch ohne die korrespondierende Ringschulter 15 vorhanden sein.

Auf Grund der gegenläufigen Konuswinkel muss beim axialen Aufschieben der Sekundärkrone 5 auf die Primärkrone 4 die Wandung des Aufnahmeraums 7 im Bereich der freien Stirnseite radial aufgeweitet werden, bis der maximale Durchmesser im Übergangsbereich zwischen den beiden konischen Abschnitten 13 und 14 an der Primärkrone 4 überwunden ist. Danach kann sich die Wandung wieder durch die Wirkung der Eigenelastizität zusammenziehen. Auf diese Weise ist in Richtung der Längsachse 12 eine formschlüssige Verbindung zwischen Primärkrone 4 und Sekundärkrone 5 gegeben, die bei Bedarf auch wieder gelöst werden kann.

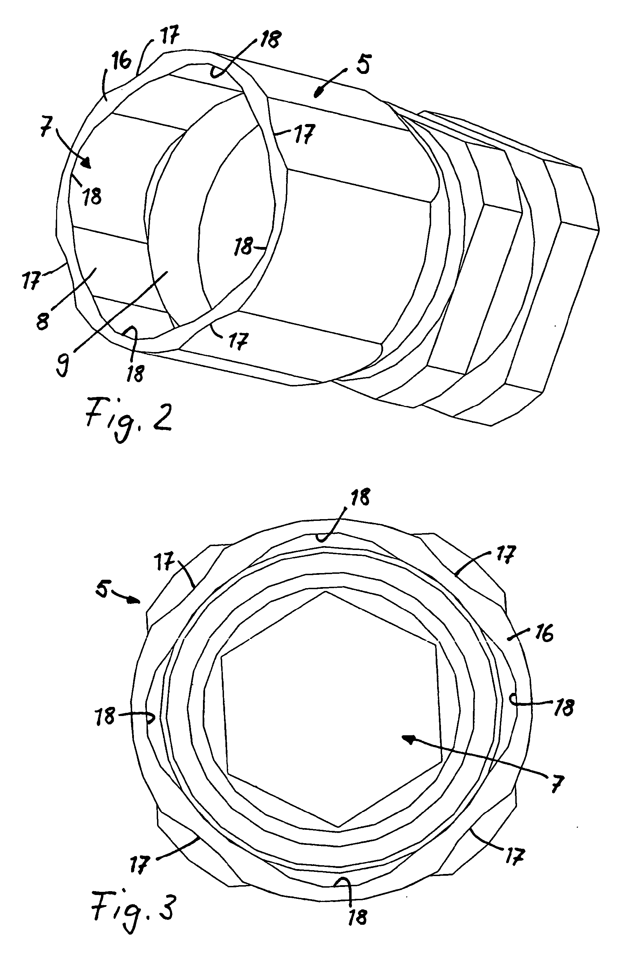

Wie den Figuren 2 und 3 zu entnehmen, sind in die Wandung des Aufnahmeraums 7 radiale Vertiefungen 17 und 18 eingebracht. Die Vertiefungen 17 befinden sich an der Außenseite der Wandung, die Vertiefungen 18 an der Innenseite der Wandung. Die Vertiefungen 17 und 18 an der Außenseite und Innenseite sind zueinander winkelversetzt angeordnet, dergestalt, dass in Umfangsrichtung gesehen sich immer eine radiale Vertiefung 17 an der Außenseite der Wandung mit einer radialen Vertiefung 18 an der Innenseite der Wandung abwechselt. Insgesamt sind über den Umfang sowohl an der Innenseite als auch an der Außenseite jeweils vier radiale Vertiefungen eingebracht. Es kann auch sinnvoll sein, nur zwei oder auch drei radiale Vertiefungen vorzusehen. Die Anzahl der radialen Vertiefungen ist vom Gesamtdurchmesser, vom gewähltem Material und von der gewünschten Haltekraft abhängig. Die radialen Vertiefungen 17, 18 haben die Form von teilkreisförmigen Bogensegmenten und bewirken jeweils eine Reduzierung der Wandstärke. Auf diese Weise wird eine etwa wellenförmige Struktur der Wandung in Umfangsrichtung erzielt, wodurch bei einem radialen Aufweiten ein Ziehharmonika- oder Girlandeneffekt erreicht werden kann, der das radiale Aufweiten und nach Wegfall der Radialkräfte auch das radiale Zusammenziehen erleichtert bzw. unterstützt.

In Umfangsrichtung ergibt sich eine Wandstärke der Wandung, die nur in einem verhältnismäßig geringen Maße variiert. Diese Gleichmäßigkeit der Wandung verbessert die Stabilität der Sekundärkrone 5, zugleich kann auf Grund der verbesserten radialen Aufweitung auf Durchbrechungen in der Wandung verzichtet werden. Die Vertiefungen 17 und 18 betragen jeweils, in Radialrichtung gesehen, nicht mehr als 50 % der Wandstärke des Aufnahmeraums 7.

Die radialen Vertiefungen 17 an der Außenseite der Wandung erstrecken sich über die gesamte axiale Länge das Aufnahmeraums 7, wohingegen die radialen Vertiefungen 18 an der Innenseite der Wandung sich axial nur über den der freien Stirnseite 16 zugewandten konischen Abschnitt 8 erstrecken.

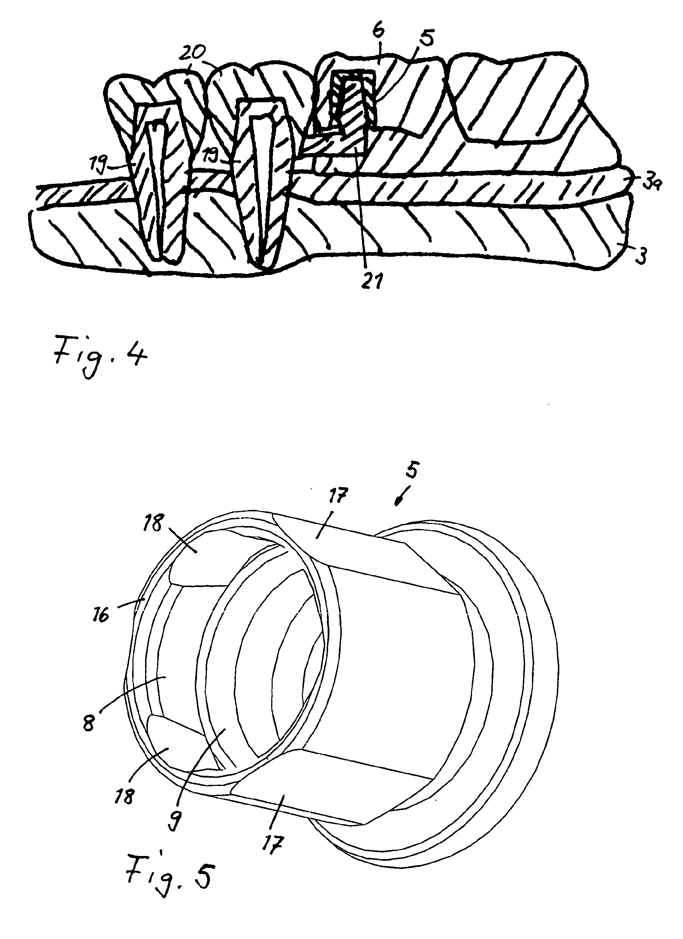

In Fig. 4 ist ein weiteres Ausführungsbeispiel gezeigt, bei dem die Verbindung zwischen einem fest sitzenden Zahn 19 und einer Prothese 6 dargestellt ist. Der Zahn 19 ragt durch das Zahnfleisch 3a hindurch und ist fest im Kiefer 3 verankert. Der Zahn 19 ist von einer Krone 20 überkront, mit der ein als Befestigungselement dienendes Trägerteil 21 fest verbunden ist, welches seitlich herausragt und etwa hakenförmig ausgebildet ist. Auf den nach oben weisenden Abschnitt des Trägerteils 21 ist die Sekundärkrone 5 aufgesetzt, die in der in den Figuren 1 bis 3 beschriebenen Weise ausgebildet ist. Die Sekundärkrone 5 ist fest mit einer Prothese 6 verbunden, wobei auf Grund der lösbaren Verbindung zwischen dem Trägerteil 21 und der Sekundärkrone 5 die Prothese 6 abgenommen und erneut wieder aufgesetzt werden kann.

Die Sekundärkrone 5 des Ausführungsbeispiels nach Fig. 5 entspricht weitgehend derjenigen nach Fig. 2 bzw. 3, jedoch mit dem Unterschied, dass bei Fig. 5 über den Umfang verteilt an der Außenseite der Wandung des Aufnahmeraums drei radiale Vertiefungen 17 und an der Innenseite ebenfalls drei radiale Vertiefungen 18 angeordnet sind. Der freien Stirnseite 16 gegenüberliegend ist die Sekundärkrone 5 von einem Deckel abgeschlossen, der die Außenwand des Aufnahmeraums radial überragt.

Die Verbindungseinrichtung kann auch als Hilfsmittel zur Abdrucknahme Verwendung finden. Hier wird die Haltekraft so eingestellt sein, dass die Sekundärkappe bei der Abdrucknahme nach dem Herausnehmen des Abdruckes in der Abdruckmasse verbleibt. Anschließend wird die Primärkrone mit einem Laboranalog verbunden und sicher und lagegenau in die Sekundärkappe bar eingeführt.

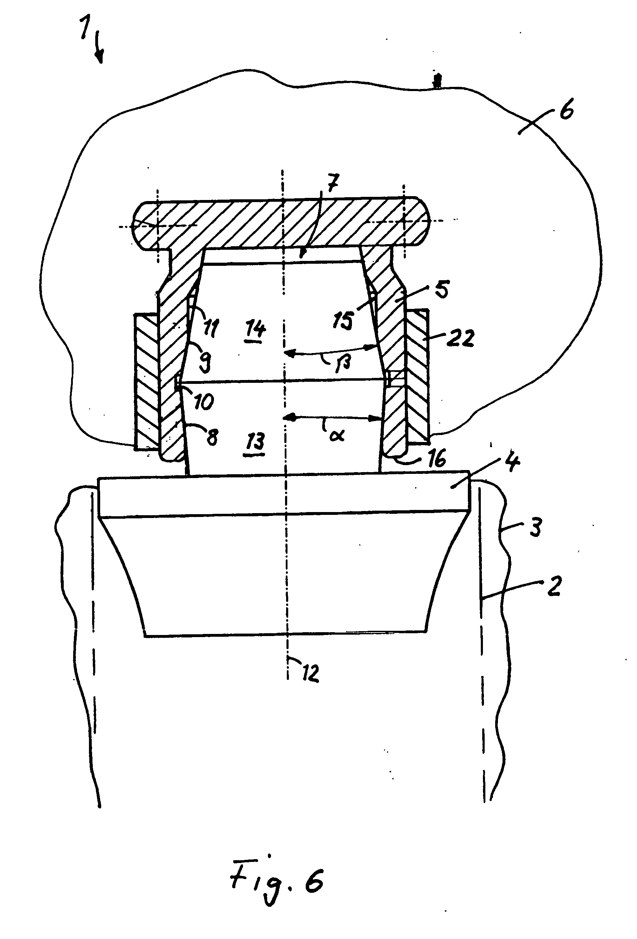

Fig. 6 zeigt eine Fig. 1 entsprechende Ausführung, so dass bezüglich gleicher Bauteile und gleicher Funktionsweisen auf die Beschreibung zu Fig. 1 verwiesen wird. Im Unterschied zu Fig. 1 ist jedoch bei Fig. 6 ein zusätzlicher Ring 22 vorgesehen, der um die äußere Mantelfläche der Sekundärkrone 5 im Bereich der konischen Abschnitte 8 und 9 gelegt ist. Der Ring 22 besteht vorzugsweise aus einem Kunststoffmaterial und besitzt eine radiale Nachgiebigkeit, so dass es möglich ist, die Sekundärkrone 5 in der Prothese 6 ohne Verkanten auf das Trägerteil 4 aufzusetzen bzw. vom Trägerteil 4 zu entfernen, indem der Ring 22 radial aufgeweitet wird. Die radiale Beweglichkeit wird entweder über eine entsprechende Wahl des Materials des Rings 22 erreicht, beispielsweise in der Ausführung als Kunststoffring über einen verhältnismäßig weichen, nachgiebigen Kunststoff, und/oder über konstruktive Maßnahmen wie beispielsweise eine Wellenform der Wandung des Rings 22, wodurch ein Ziehharmonika-oder Girlandeneffekt erreicht wird, bzw. durch Ausnehmungen oder Schlitze in der Wandung des Rings 22.

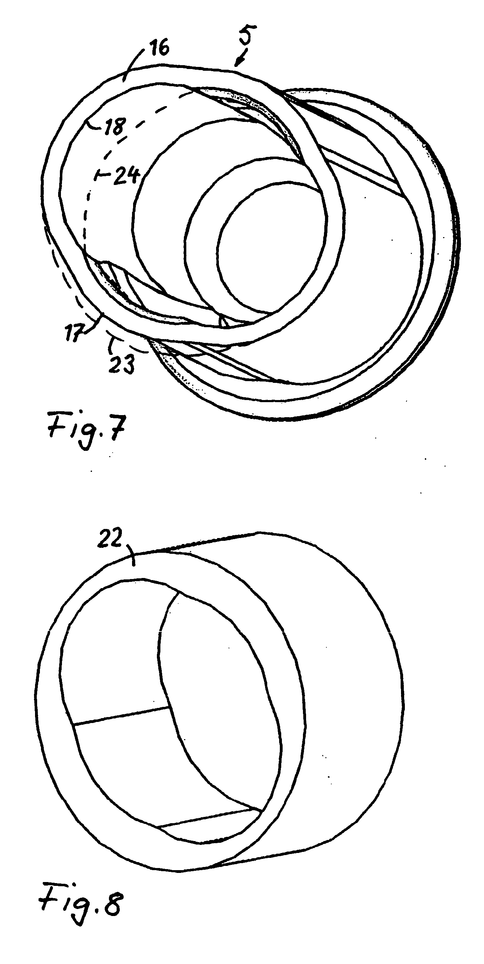

In Fig. 7 ist eine Sekundärkrone 5 in Einzeldarstellung gezeigt, wobei die Sekundärkrone 5 durch Ausfräsen eines Rohlings bzw. Ausgangmodells an der Innen- und Außenseite hergestellt wird. Eingetragen ist mit strichlierter Linie der Außenkreis 23 sowie der Innenkreis 24 des Ausgangmodells, wobei die Vertiefungen 17 und 18 an der Außen- bzw. Innenseite durch Ausfräsen hergestellt werden. Das Ausgangsmodell ist vorzugsweise mit kreisförmigem bzw. rundem Querschnitt ausgeführt, beispielsweise zylindrisch, und besitzt eine konstante Wandstärke, wobei gegebenenfalls auch unrunde Ausführungen, beispielsweise elliptische Querschnittsgeometrien, als auch nicht-konstante Wandstärken in Betracht kommen.

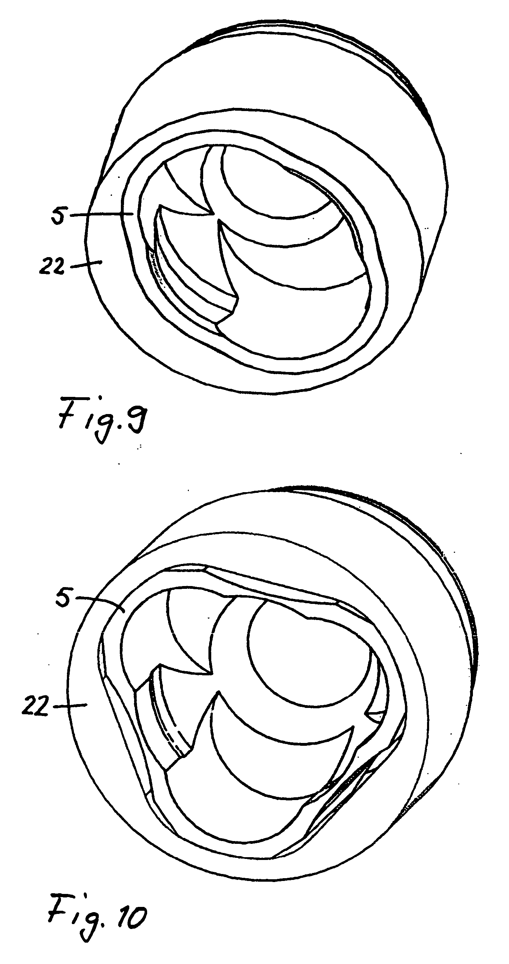

In Fig. 8 ist der Ring 22 in Einzeldarstellung gezeigt, Fig. 9 zeigt die Sekundärkrone 5 mit dem auf den Außenmantel aufgeschobenen Ring 22. Der Ring 22, welcher vorzugsweise aus einem elastisch nachgiebigen Kunststoffmaterial besteht, besitzt über seinen Umfang eine nicht-konstante Wandstärke, welche im Bereich der radial am weitesten nach außen ragenden Erhebungen an der Mantelfläche der Sekundärkrone 5 am geringsten und im zwischenliegenden Bereich am dicksten ist. Durch die nicht-konstante Wandstärke kann der flexible Ring 22 in Richtung der dickeren Wandstärke mit geringerem Kraftaufwand zusammengepresst werden, um die radiale Aufweitung und das Zusammenziehen der Sekundärkrone an dieser Stelle zuzulassen, was die Entnahme der Sekundärkrone 5 vom Trägerteil begünstigt.

Wie Fig. 9 zu entnehmen, ist die Innenkontur des Rings 22 an die Außenkontur der Sekundärkrone 5 angepasst, so dass der Außenmantel der Sekundärkrone 5 und der Innenmantel des Rings 22 flächig aneinander liegen. In Fig. 10 ist dagegen ein weiteres Ausführungsbeispiel dargestellt, bei dem der Außenmantel der Sekundärkrone 5 und der Innenmantel des Rings 22 nur abschnittsweise flächig aneinander liegen. Darüber hinaus bestehen Abschnitte, in denen die äußere Mantelfläche der Sekundärkrone 5 mit einem Abstand bzw. einem Spiel zur Innenseite des Rings 22 liegt, wodurch eine radiale Aufweitung der Sekundärkrone 5 an diesen Stellen begünstigt wird. Die Sekundärkrone 5 weist im Ausführungsbeispiel gemäß Fig. 10 eine nicht-konstante Wandstärke auf, wobei das Spiel zur Innenseite des Rings 22 im Bereich von Abschnitten der Sekundärkrone mit reduzierter Wandstärke liegt.

## Patentansprüche

1. Verbindungseinrichtung zur lösbaren Verbindung eines Trägerteils (4, 21) mit einer Sekundärkrone (5), umfassend das Trägerteil und die Sekundärkrone, wobei Sekundärkrone (5) und Trägerteil (4, 21) ineinandergreifen, derart, dass die Sekundärkrone (5) oder das Trägerteil (4, 21) mit einem Aufnahmeraum (7) ausgebildet ist, in den das andere Bauteil einragt,
**dadurch gekennzeichnet,**
**dass** an der Innenseite und der Außenweite der Wandung des Aufnahmeraums (7) winkelversetzt zueinander radiale Vertiefungen (17, 18) und/oder radiale Erhebungen angeordnet sind und dass der Aufnahmeraum (7) mindestens einen konischen Abschnitt (8, 9) aufweist.

2. Verbindungseinrichtung nach Anspruch 1,
**dadurch gekennzeichnet,**
**dass** die Wandung des Aufnahmeraums (7) zumindest abschnittsweise durchgehend und ohne Durchbrechungen ausgebildet ist.

3. Verbindungseinrichtung nach Anspruch 1 oder 2,
**dadurch gekennzeichnet,**
**dass** in die Innenseite und die Außenseite der Wandung jeweils radiale Vertiefungen (17, 18) eingebracht sind.

4. Verbindungseinrichtung nach einem der Ansprüche 1 bis 3,
**dadurch gekennzeichnet,**
**dass** die radialen Vertiefungen (17, 18) und/oder die radialen Erhebungen sich über die axiale Länge des Aufnahmeraums (7) erstrecken.

5. Verbindungseinrichtung nach einem der Ansprüche 1 bis 4,
**dadurch gekennzeichnet,**
**dass** der Aufnahmeraum (7) zwei konische Abschnitte (8, 9) mit gegenläufigem Konuswinkel aufweist, wobei sich ein konischer Abschnitt (8) in Richtung der freien Stirnseite (16) des Aufnahmeraums (7) verjüngt.

6. Verbindungseinrichtung nach Anspruch 5,
**dadurch gekennzeichnet,**
**dass** in den Übergangsbereich zwischen den beiden konischen Abschnitten (8, 9) eine Ausnehmung eingebracht ist, insbesondere eine umlaufende Ringnut (10).

7. Verbindungseinrichtung nach Anspruch 5 oder 6,
**dadurch gekennzeichnet,**
**dass** in einen konischen Abschnitt (9) eine zylindrische Ausnehmung (11) eingebracht ist.

8. Verbindungseinrichtung nach einem der Ansprüche 5 bis 7,
**dadurch gekennzeichnet,**
**dass** die radialen Vertiefungen (18) an der Innenseite der Wandung sich axial nur über die Länge eines konischen Abschnitts (8) erstrecken.

9. Verbindungseinrichtung nach einem der Ansprüche 5 bis 8,
**dadurch gekennzeichnet,**
**dass** sich die Konuswinkel (α, β) der beiden konischen Abschnitte (8, 9) voneinander unterscheiden, wobei insbesondere der der freien Stirnseite (16) benachbarte konische Abschnitt (8) einen kleineren Konuswinkel (α) aufweist.

10. Verbindungseinrichtung nach einem der Ansprüche 5 bis 9,
**dadurch gekennzeichnet,**
**dass** der Konuswinkel (α) des der freien Stirnseite (16) benachbarten konischen Abschnitts (8) nicht mehr als 10° beträgt, insbesondere 8°.

11. Verbindungseinrichtung nach einem der Ansprüche 5 bis 10,
**dadurch gekennzeichnet,**
**dass** der Konuswinkel (β) des der freien Stirnseite (16) abgewandten konischen Abschnitts (9) für einen Winkelausgleich bei divergierenden Implantaten mindestens 10° und vorzugsweise 25° beträgt.

12. Verbindungseinrichtung nach einem der Ansprüche 1 bis 11,
**dadurch gekennzeichnet,**
**dass** das Trägerteil (21) eine Primärkrone (4) ist, die mit einem Implantatteil (2) verbunden ist, das in den Kiefer (3) des Patienten eingesetzt ist.

13. Verbindungseinrichtung nach einem der Ansprüche 1 bis 12,
**dadurch gekennzeichnet,**
**dass** das Trägerteil (21) ein seitlich herausstehendes Befestigungselement ist, das fest mit einem Zahnersatzteil (20) verbunden ist.

14. Verbindungseinrichtung nach einem der Ansprüche 1 bis 13,
**dadurch gekennzeichnet,**
**dass** die Sekundärkrone (5) von einem Ring (22) umgriffen ist.

15. Zahnersatz mit einer Verbindungseinrichtung nach einem der Ansprüche 1 bis 14.

## Claims

1. Connecting device for the releasable connection of a support part (4, 21) to a secondary crown (5), comprising the support part and the secondary crown, wherein secondary crown (5) and support part (4, 21) engage one inside the other, so that the secondary crown (5) or the support part (4, 21) is formed with a receiving space (7) into which the other component protrudes, **characterized in that** radial depressions (17, 18) and/or radial elevations, angularly offset in relation to one another, are arranged on the inner face and the outer face of the wall of the receiving space (7), and **in that** the receiving space (7) has at least one conical portion (8, 9).

2. Connecting device according to Claim 1, **characterized in that** the wall of the receiving space (7), at least in part, is designed continuously and without interruptions.

3. Connecting device according to Claim 1 or 2, **characterized in that** radial depressions (17, 18) are formed in each of the inner face and the outer face of the wall.

4. Connecting device according to one of Claims 1 to 3, **characterized in that** the radial depressions (17, 18) and/or the radial elevations extend along the axial length of the receiving space (7).

5. Connecting device according to one of Claims 1 to 4, **characterized in that** the receiving space (7) has two conical portions (8, 9) with oppositely directed cone angles, wherein one conical portion (8) tapers in the direction of the free end face (16) of the receiving space (7).

6. Connecting device according to Claim 5, **characterized in that** a recess, in particular a circumferential annular groove (10), is formed in the transition area between the two conical portions (8, 9).

7. Connecting device according to Claim 5 or 6, **characterized in that** a cylindrical recess (11) is formed in one conical portion (9).

8. Connecting device according to one of Claims 5 to 7, **characterized in that** the radial depressions (18) on the inner face of the wall extend axially only along the length of one conical portion (8).

9. Connecting device according to one of Claims 5 to 8, **characterized in that** the cone angles (α, β) of the two conical portions (8, 9) differ from each other, wherein in particular the conical portion (8) adjacent to the free end face (16) has a smaller cone angle (α).

10. Connecting device according to one of Claims 5 to 9, **characterized in that** the cone angle (α) of the conical portion (8) adjacent to the free end face (16) is not more than 10°, in particular 8°.

11. Connecting device according to one of Claims 5 to 10, **characterized in that** the cone angle (β) of the conical portion (9) directed away from the free end face (16), for an angle compensation in the case of divergent implants, is at least 10° and preferably 25°.

12. Connecting device according to one of Claims 1 to 11, **characterized in that** the support part (21) is a primary crown (4), which is connected to an implant part (2) fitted in the jaw (3) of the patient.

13. Connecting device according to one of Claims 1 to 12, **characterized in that** the support part (21) is a laterally protruding fastening element, which is rigidly connected to a tooth replacement part (20).

14. Connecting device according to one of Claims 1 to 13, **characterized in that** a ring (22) engages around the secondary crown (5).

15. Denture with a connecting device according to one of Claims 1 to 14.

## Revendications

1. Dispositif de liaison pour la liaison amovible d'une partie de support (4, 21) avec une couronne secondaire (5), comprenant la partie de support et la couronne secondaire, la couronne secondaire (5) et la partie de support (4, 21) s'engageant l'une dans l'autre de telle sorte que la couronne secondaire (5) ou la partie de support (4, 21) soit réalisée avec un espace de réception (7) dans lequel pénètre l'autre composant,
**caractérisé en ce que**
sur le côté intérieur et le côté extérieur de la paroi de l'espace de réception (7) sont disposés, de manière décalés angulairement les uns par rapport aux autres, des renfoncements radiaux (17, 18) et/ou des rehaussements radiaux, et **en ce que** l'espace de réception (7) présente au moins une portion conique (8, 9).

2. Dispositif de liaison selon la revendication 1,
**caractérisé en ce que**
la paroi de l'espace de réception (7) est réalisée au moins en partie sous forme continue et sans interruptions.

3. Dispositif de liaison selon la revendication 1 ou 2,
**caractérisé en ce que**
dans le côté intérieur et le côté extérieur de la paroi sont à chaque fois pratiqués des renfoncements radiaux (17, 18).

4. Dispositif de liaison selon l'une quelconque des revendications 1 à 3,
**caractérisé en ce que**
les renfoncements radiaux (17, 18) et/ou les rehaussements radiaux s'étendent sur la longueur axiale de l'espace de réception (7).

5. Dispositif de liaison selon l'une quelconque des revendications 1 à 4,
**caractérisé en ce que**
l'espace de réception (7) présente deux portions coniques (8, 9) d'angle de conicité opposés, une portion conique (8) se rétrécissant dans la direction du côté frontal libre (16) de l'espace de réception (7).

6. Dispositif de liaison selon la revendication 5,
**caractérisé en ce que**
dans la région de transition entre les deux portions coniques (8, 9) est pratiqué un évidement, notamment une rainure annulaire périphérique (10).

7. Dispositif de liaison selon la revendication 5 ou 6,
**caractérisé en ce**
**qu'**un évidement cylindrique (11) est pratiqué dans une portion conique (9).

8. Dispositif de liaison selon l'une quelconque des revendications 5 à 7,
**caractérisé en ce que**
les renfoncements radiaux (18) sur le côté intérieur de la paroi s'étendent axialement uniquement sur la longueur d'une portion conique (8).

9. Dispositif de liaison selon l'une quelconque des revendications 5 à 8,
**caractérisé en ce que**
les angles de conicité (α, β) des deux portions coniques (8, 9) sont différents l'un de l'autre, la portion conique (8) adjacente au côté frontal libre (16) présentant notamment un angle de conicité (α) plus petit.

10. Dispositif de liaison selon l'une quelconque des revendications 5 à 9,
**caractérisé en ce que**
l'angle de conicité (α) de la portion conique (8) adjacente au côté frontal libre (16) ne dépasse pas 10°, notamment vaut 8°.

11. Dispositif de liaison selon l'une quelconque des revendications 5 à 10,
**caractérisé en ce que**
l'angle de conicité (β) de la portion conique (9) opposée au côté frontal libre (16) pour une compensation annulaire pour des implants divergents vaut au moins 10° et de préférence 25°.

12. Dispositif de liaison selon l'une quelconque des revendications 1 à 11,
**caractérisé en ce que**
la partie de support (21) est une couronne primaire (4) qui est connectée à une partie d'implant (2) qui est insérée dans la mâchoire (3) du patient.

13. Dispositif de liaison selon l'une quelconque des revendications 1 à 12,
**caractérisé en ce que**
la partie de support (21) est un élément de fixation saillant latéralement, qui est connecté fixement à une prothèse dentaire (20).

14. Dispositif de liaison selon l'une quelconque des revendications 1 à 13,
**caractérisé en ce que**
la couronne secondaire (5) est saisie sur sa périphérie par une bague (22).

15. Prothèse dentaire comprenant un dispositif de liaison selon l'une quelconque des revendications 1 à 14.
